(19) **Europäisches Patentamt / European Patent Office / Office européen des brevets**

(11) **EP 2 072 773 A1**

(12) **EUROPEAN PATENT APPLICATION**

(43) Date of publication:
24.06.2009 Bulletin 2009/26

(51) Int Cl.:
*F01N 3/08* [(2006.01)]    *F01N 3/20* [(2006.01)]
*F01N 7/02* [(2006.01)]

(21) Application number: 07150308.0

(22) Date of filing: 21.12.2007

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK RS

(71) Applicant: Umicore AG & Co. KG
63457 Hanau-Wolfgang (DE)

(72) Inventors:
• **Eckhoff, Stephan**
  **63755 Alzenau (DE)**
• **Hoyer, Rüdiger**
  **63450 Hanau (DE)**
• **Philipp, Susanne**
  **63128 Dietzenbach (DE)**
• **Grisstede, Ina**
  **63450 Hanau (DE)**
• **Müller, Wilfried**
  **61184 Karben (DE)**
• **Rohr, Friedemann**
  **63452 Hanau (DE)**

(54) **Method for treating NOx in exhaust gas and system therefore**

(57) The present invention relates to a method for the treatment of an exhaust gas comprising $NO_x$, wherein the method comprises the step of subjecting the exhaust gas to an exhaust gas treatment system comprising, in order of the exhaust stream: (a) a first $NO_x$ storage catalytic converter (2,2'); (b) a catalytic converter (3) for selective catalytic reduction (SCR) downstream of the first $NO_x$ storage catalytic converter; and (c) a catalytic converter (4) having oxygen storage capacity downstream of the SCR catalytic converter; wherein the exhaust gas treatment system is operated in alternating rich and lean phases, wherein the rich phase is terminated when the amount of reducing components leaving the first $NO_x$ storage catalytic converter is at least 0.05 times the amount of reducing components consumed by the first $NO_x$ storage catalytic converter during the time interval beginning when the air/fuel ratio upstream of the first $NO_x$ storage catalytic converter turns from lean to rich conditions and ending when the air/fuel ratio downstream of the first $NO_x$ storage catalytic converter turns from lean to rich conditions.

Optionally there can be provided a close coupled three-way or diesel oxidation or $NO_x$ storage catalytic converter (1,1').

**Description**

The present invention relates to a method for the treatment of an exhaust gas and to exhaust gas treatment systems. The present invention further relates to the use of a catalytic converter having oxygen storage capacity for prolonging the rich phase of an exhaust gas treatment system.

During the combustion of fuels in internal combustion engines, an exhaust gas is developed which contains unburned hydrocarbons (HC), carbon monoxide (CO), nitrogen oxides ($NO_x$) and particles as pollutants. Exhaust gas catalysts for the simultaneous conversion of hydrocarbons, carbon monoxide and nitrogen oxides, so-called three-way catalysts, require a stoichiometric composition of exhaust gas, with an oxygen concentration of about 0.7 vol-.%, for the reaction to take place. The exhaust gas composition is usually described by the normalized air to fuel ratio $\lambda$, which is defined as the air/fuel ratio normalized to stoichiometric conditions. The air/fuel ratio states how many kilograms of air are required for complete combustion of one kilogram of fuel. With conventional fuels, the stoichiometric air/fuel ratio has a value of 14.6, which corresponds to a normalized air/fuel ratio $\lambda$ of 1.

In lean-mix engines, such as diesel engines and lean-burning gasoline engines, which are generally operated at a normalized air to fuel ratio $\lambda$ higher than 1, removal of the nitrogen oxides and particles causes special difficulties. Due to the high oxygen concentration in the exhaust gas from these engines, which can be up to 15 vol.-%, the nitrogen oxides ($NO_x$) contained in the exhaust gas cannot readily be reacted with the hydrocarbons (HC) and carbon monoxide (CO) on a conventional exhaust gas catalyst, because in this case the reducing components (HC and CO and also small amounts of hydrogen $H_2$) are oxidized directly by oxygen.

In order to convert the nitrogen oxides developed during combustion, two different catalytic methods have proven to be successful in the past: on the one hand, there is the $NO_x$ adsorber technology in which, during lean operating states of the engine, the nitrogen oxides are adsorbed on a so-called $NO_x$ storage catalyst and, during rich operating states, are re-desorbed and reduced; and on the other hand, the selective catalytic reduction (SCR) technology in which the nitrogen oxides contained in the oxygen-rich exhaust gas are reduced selectively to nitrogen and water using ammonia ($NH_3$) or a corresponding precursor substance convertible into ammonia.

In the $NO_x$ adsorber technology, the nitrogen oxides are stored in the form of nitrates during lean-mix operation of the internal combustion engine, with the aid of so-called nitrogen oxide storage catalysts, for example, alkaline earth metal oxides, in particular barium oxide. For storage purposes, the nitrogen oxides, between 50 and 90 vol.% of which consists of nitrogen monoxide depending on the type of engine and mode of operation of the engine, first have to be oxidized to nitrogen dioxide before they can form nitrates with the storage materials. Oxidation takes place mainly on the storage catalyst itself and this is provided, for example, with platinum as a catalytically active component.

Depending on the driving conditions, the storage material has to be regenerated at certain intervals. To this end, the internal combustion engines can be operated for brief periods with rich air/fuel mixtures. Under the reducing exhaust gas conditions which then prevail, the nitrates are decomposed and the nitrogen oxides being released are converted into nitrogen, with simultaneous oxidation of the reducing components. The acceleration phases may sometimes be used for regeneration of the storage material. However, in the absence of acceleration phases, targeted regeneration is required and this has to be achieved by appropriate regulation of the engine. The fuel required for this reduces the theoretical fuel saving when using lean-mix engines.

Current storage catalysts still exhibit high sensitivity towards sulfur oxides contained in the exhaust gas from internal combustion engines. Sulfur oxides, after oxidation to sulfur trioxide on the storage catalyst, react with the storage material to form stable sulfates which are thermally very stable and continuously reduce the storage capacity for nitrogen oxides.

The SCR technology involves the reduction of $NO_x$ by ammonia over a SCR catalyst that is typically composed of base metals. This reaction can take place even in an oxidizing environment. SCR can achieve $NO_x$ reduction in excess of 90%. However, one of the major disadvantages of this technology is the need for an on-board reservoir for ammonia or a suitable precursor thereof, such as urea. Further, there is concern over the lack of infrastructure for distributing ammonia or the precursor and over the possible release of ammonia into the environment. A further difficulty using this type of exhaust gas treatment is that both the hydrolysis of urea and the SCR reaction using the common SCR catalysts shows insufficient reaction rates at temperatures below 150 °C. Typically the light-off temperature under the chosen conditions is above 150 °C. As used herein, the light-off temperature of a catalyst refers to the temperature upstream of the catalyst at which the catalyst converts the pollutant in question (here the nitrogen oxides) just at a 50% rate.

Lean-mix operated gasoline engines, and in particular diesel engines, often achieve exhaust gas temperatures of less than 350°C when operating under part loads. Therefore catalysts are required which develop their maximum rates of conversion at the lowest possible exhaust gas temperatures of less than 350°C, preferably less than 300°C.

Both the $NO_x$ adsorber technology and the SCR technology often provide only low conversion rates at temperatures below 250°C. In an attempt to increase the conversion rates at low temperatures, catalyst systems have been developed containing an upstream $NO_x$ storage catalytic converter and a downstream SCR catalytic converter. In these systems, nitrogen oxides are stored on the $NO_x$ storage catalytic converter during lean operation phases ($\lambda > 1$). During

short rich operation phases ($\lambda < 1$), the nitrogen oxides are reduced to nitrogen, but partially also to ammonia, i.e. ammonia is produced "on-board". The downstream SCR catalytic converter captures ammonia produced by the $NO_x$ storage catalytic converter during rich operation phases. During the subsequent lean operation phase, the ammonia stored on the SCR catalytic converter can contribute to the overall $NO_x$ conversion.

For example, US 2004/0076565 describes an emission control system for controlling $NO_x$ and $NH_3$ emissions from an exhaust stream. The system comprises a lean $NO_x$ trap in communication with the exhaust stream for reducing $NO_x$ emissions; and a $NH_3$-SCR catalyst in communication with the exhaust stream for adsorbing $NH_3$, wherein the $NH_3$ adsorbed by the $NH_3$-SCR catalyst reacts with $NO_x$ in the exhaust stream to improve the reduction of $NO_x$ and $NH_3$. WO 2005/047663 relates to an emissions treatment system for an exhaust stream, comprising a certain $NO_x$ storage reduction catalyst and a certain SCR catalyst disposed downstream of the $NO_x$ storage reduction catalyst. US-A-2006/0010857 describes further exhaust treatment systems having a SCR reactor downstream of a $NO_x$ adsorber. In one embodiment, syn gas from a fuel reformer is used to regenerate the $NO_x$ adsorber. In another embodiment, an additional ammonia source is included. US-A-2006/0153761 discloses a specific exhaust gas aftertreatment installment utilizing a nitrogen oxide storage catalytic converter, a SCR catalytic converter and a particulate filter upstream of the nitrogen oxide storage catalytic converter or between the latter and the SCR catalytic converter or downstream of the SCR catalytic converter. US-A-2006/0010859 relates to an exhaust aftertreatment system comprising two or more branches, at least one of which contains a $NO_x$ adsorber-catalyst. The branches unite downstream into a trailing conduit that contains an ammonia-SCR catalyst. US-B-7,043,902 discloses an exhaust gas purification system equipped, from an upstream side toward downstream side through which an exhaust gas flows, with a plasma reactor and a catalyst unit charged with a catalyst acting on $NO_x$ in the exhaust gas in this order, and equipped with a reducing agent supplying device to supply a reducing agent at an upstream side of the plasma reactior, wherein the catalyst has a $NO_2$ adsorptive catalyst layer and a $NO_2$ selective reduction catalyst layer contacting the $NO_2$ adsorptive catalyst layer.

US-A-7,178,331 relates to a certain exhaust system for a lean-burn internal combustion engine comprising a nitrogen oxide absorbent, a catalyst for catalyzing the selective catalytic reduction of $NO_x$ with a $NO_x$ specific reactant, first means for introducing a $NO_x$ specific reactant or a precursor thereof into an exhaust gas upstream of the SCR catalyst and means for controlling the introduction of the $NO_x$-specific reactant or precursor thereof into the exhaust gas via the first introducing means, wherein the SCR catalyst is disposed upstream of the $NO_x$ absorbent.

While the above systems provide some improvements as compared to the use of the $NO_x$ adsorber technology or the SCR technology alone, still further improvements in exhaust gas treatment systems are desired.

An object of the present invention is to provide a method of the treatment of exhaust gas with an improved conversion rate of the nitrogen oxides at low exhaust gas temperatures as compared to the prior art. Moreover, the invention is to provide an exhaust gas treatment system which has improved activity for the conversion of nitrogen oxides at low exhaust gas temperatures. In particular, it is an object of the present invention to improve the conversion rate of the nitrogen oxides at low exhaust gas temperatures without affecting an undesirable increase in hydrocarbon and carbon monoxide as well as ammonia emissions.

The present inventors surprisingly found that these objects can be achieved by the method and the exhaust gas treatment system of the present invention. Accordingly, in a first aspect the present invention relates to a method for the treatment of an exhaust gas comprising $NO_x$,

wherein the method comprises the step of subjecting the exhaust gas to an exhaust gas treatment system comprising, in order of the exhaust stream:

> a) a first $NO_x$ storage catalytic converter;
> b) a catalytic converter for selective catalytic reduction (SCR) downstream of the first $NO_x$ storage catalytic converter; and
> c) a catalytic converter having oxygen storage capacity downstream of the SCR catalytic converter,

wherein the exhaust gas treatment system is operated in alternating rich and lean phases, wherein the rich phase is terminated when the amount of reducing components leaving the first $NO_x$ storage catalytic converter is at least 0.05 times the amount of reducing components consumed by the first $NO_x$ storage catalytic converter during the time interval beginning when the air/fuel ratio upstream of the first $NO_x$ storage catalytic converter turns from lean to rich conditions and ending when the air/fuel ratio downstream of the first $NO_x$ storage catalytic converter turns from lean to rich conditions.

The present invention further relates to exhaust gas treatment systems that can suitably be employed in the present method. In particular, in a second aspect the present invention relates to an exhaust gas treatment system comprising, in order of the exhaust stream:

> a) a first $NO_x$ storage catalytic converter;
> b) a catalytic converter for selective catalytic reduction (SCR) downstream of the first $NO_x$ storage catalytic converter;

and

c) a second NO$_x$ storage catalytic converter downstream of the SCR catalytic converter;

wherein the exhaust gas treatment system further comprises a lambda sensor downstream of the first NO$_x$ storage catalytic converter or downstream of the second NO$_x$ storage catalytic converter.

In a third aspect the present invention relates to an exhaust gas treatment system comprising, in order of the exhaust stream:

a) a first NO$_x$ storage catalytic converter;

b) a catalytic converter for selective catalytic reduction (SCR) downstream of the first NO$_x$ storage catalytic converter; and

c) a second NO$_x$ storage catalytic converter downstream of the SCR catalytic converter;

wherein the exhaust gas treatment system does not contain a second SCR catalytic converter downstream of the second NO$_x$ storage catalytic converter.

In a fourth aspect, the present invention relates to an exhaust gas treatment system comprising, in order of the exhaust stream:

a) a first NO$_x$ storage catalytic converter;

b) a catalytic converter for selective catalytic reduction (SCR) downstream of the first NO$_x$ storage catalytic converter; and

c) a second NO$_x$ storage catalytic converter downstream of the SCR catalytic converter;

wherein the first NO$_x$ storage catalytic converter comprises less oxygen storage material than the second NO$_x$ storage catalytic converter.

The present invention further relates in a fifth aspect to the use of a catalytic converter having oxygen storage capacity for prolonging the rich phase of an exhaust gas treatment system operated in alternating rich and lean phases, the exhaust gas treatment system comprising, in order of the exhaust stream:

a) a first NO$_x$ storage catalytic converter; and

b) a catalytic converter for selective catalytic reduction (SCR) downstream of the first NO$_x$storage catalytic converter,

wherein the catalytic converter having oxygen storage capacity is configured downstream of the SCR catalytic converter.

As compared to the prior art exhaust gas treatment systems described above which comprise a NO$_x$ storage catalytic converter and a downstream SCR catalytic converter, the present method and exhaust gas treatment systems are advantageous in that a higher NO$_x$ conversion can be achieved at lower temperatures, while an increase in HC/CO emissions can be avoided.

Without wishing to be bound by theory, the advantageous properties achieved by the present invention may be explained as follows. The prior art exhaust gas treatment systems are often controlled by terminating the lean phase at a point when the NO$_x$ breakthrough downstream of the first NO$_x$ storage catalytic converter or downstream of the SCR catalyst increases. Conversely, the rich phase is terminated at a point when reductant breakthrough increases. Ammonia is formed on the NO$_x$ storage catalytic converter. However, ammonia leaves the NO$_x$ storage catalytic converter at about the same time as the breakthrough of reductant occurs. Hence, even though some ammonia may be stored on the downstream SCR catalytic converter, reductant breakthrough occurs relatively fast, leading to termination of the rich phase before larger amounts of ammonia can leave the NO$_x$ storage catalytic converter and be stored on the downstream SCR catalytic converter. In particular, zeolite-containing SCR catalytic converters typically have low oxygen storage capacities and a low conversion rate for the oxidation of hydrocarbons and carbon monoxide.

It has now been found that in prior art exhaust gas treatment systems comprising a NO$_x$ storage catalytic converter and a downstream SCR catalytic converter termination of the rich phase often occurs at an earlier stage than would be desirable for an optimal NO$_x$ conversion. It has now been found that by supplying a larger amount of reducing components by e.g. prolonging the rich phase or applying lower air/fuel ratios, larger amounts of ammonia are formed on the NO$_x$ storage catalytic converter. Undesirable emissions of carbon monoxide and hydrocarbons that may be associated with the supply of a larger amount of reducing components can, for example, be avoided by adding a catalytic converter having oxygen storage capacity downstream of the SCR catalytic converter.

In the present method, the exhaust gas treatment system is operated in alternating rich and lean phases, i.e. the exhaust gas entering the exhaust gas treatment system alters between rich air/fuel ratios and lean air/fuel ratios. The exhaust gas composition can be altered from a lean to a rich air/fuel ratio, for example, by fuel injection into the exhaust pipe or by suitable engine control.

The lean phase can be terminated when nitrogen oxides start leaving the downstream catalytic converter having oxygen storage capacity. This point can, for example, be determined by an engine control unit which is modelling the $NO_x$-loading of the $NO_x$ storage catalytic converter online or by direct measurement of the $NO_x$ breakthrough with e.g. a $NO_x$-sensor.

The rich phase is terminated when the amount of reducing components leaving the first $NO_x$ storage catalytic converter is at least 0.05 times the amount of reducing components consumed by the first $NO_x$ storage catalytic converter during the time interval beginning when the air/fuel ratio upstream of the first $NO_x$ storage catalytic converter turns from lean to rich conditions and ending when the air/fuel ratio downstream of the $NO_x$ storage catalyst turns from lean to rich conditions. Alternatively, the rich phase is terminated when the amount of reducing components leaving the first $NO_x$ storage catalytic converter is at least 0.1 times or at least 0.2 times or at least 0.5 times the amount of reducing components consumed by the first $NO_x$ storage catalytic converter during the time interval beginning when the air/fuel ratio upstream of the first $NO_x$ storage catalytic converter turns from lean to rich conditions and ending when the air/fuel ratio downstream of the $NO_x$ storage catalyst turns from lean to rich conditions. The rich phase is terminated at the latest when the air/fuel ratio in the exhaust gas downstream of the catalytic converter having oxygen storage capacity turns from lean to rich conditions.

Reducing components entering the first $NO_x$ storage catalytic converter mainly include hydrocarbons, hydrogen and carbon monoxide. Further reducing components, such as ammonia and hydrogen sulphide, may also be present in small amounts.

The amount of reducing components refers to the mass-oxygen-equivalent of the reducing components, i.e. the mass of oxygen that is necessary for oxidizing the reducing components, i.e. the sum of the mass of oxygen that is necessary to convert the hydrocarbons and carbon monoxide to carbon dioxide, to convert ammonia to nitrogen and water, to convert hydrogen to water and to convert other reducing components, which may be present in small amounts, into the oxidized derivative thereof. Oxidizing components which are able to oxidize the reducing components (i.e. to consume the reducing components) and which are stored at the $NO_x$ storage catalytic converter include oxygen, nitrogen oxides and sulphur oxides.

The amount of reducing components in the first $NO_x$ storage catalytic converter can be calculated as mass-oxygen-equivalent, for example, by measuring the air/fuel ratio upstream and downstream of the $NO_x$ storage catalytic converter during a switch from lean to rich exhaust conditions. The delay of the air/fuel ratio shift from lean to rich conditions upstream and downstream of the $NO_x$ storage catalyst enables to calculate the amount of reducing components consumed by the $NO_x$ storage catalytic converter as mass-oxygen-equivalent.

In particular, the amount of reducing components in mass-oxygen-equivalents can be determined as follows. By switching from lean to rich operation, the reducing components are oxidized by the oxygen stored at the oxygen storage materials in the $NO_x$ storage catalytic converter as well as by the nitrogen oxides which are released from the $NO_x$ storage materials and reduced in the $NO_x$ storage catalytic converter during rich operation. The amount of reducing components consumed by the first $NO_x$ storage catalytic converter at the temperature at which a given system is operated can be calculated as mass-oxygen-equivalent by measuring the air/fuel ratio upstream and downstream of the first $NO_x$ storage catalytic converter during a switch from lean to rich exhaust conditions using the following equitation:

$$m_{RC(first\_NSC)}(O_2) = \int_{LSF_{firstNSCin}Switch\_l/r}^{LSF_{firstNSCout}Switch\_l/r} \left[ \left(1 - \lambda_{fristNSCin}\right) * \frac{\dot{m}_{IntakeAir}}{\left(\lambda_{fristNSCin}\right)} * c_{Air}(O_2) * \frac{M(O_2)}{M(Air)} \right] * dt$$

The amount of reducing components leaving the first $NO_x$ storage catalytic converter during rich operation can be calculated by using the following equitation:

$$m_{RC(leaving\_first\_NSC)}(O_2) = \int_{LSF_{firstNSCout}Switch\_l/r}^{LSF_{firstNSCout}Switch\_r/l} \left[ \left(1 - \lambda_{fristNSCout}\right) * \frac{\dot{m}_{IntakeAir}}{\left(\lambda_{fristNSCout}\right)} * c_{Air}(O_2) * \frac{M(O_2)}{M(Air)} \right] * dt$$

In the above equations, the variables have the following meaning:

5

| | |
|---|---|
| $m_{RC(first\_NSC)}(O_2) =$ | Mass of reducing components consumed by the first $NO_x$ storage catalytic converter calculated as mass oxygen equivalent |
| $m_{RC(leaving\_first\_NSC)}(O_2) =$ | Mass of reducing components leaving the first $NO_x$ storage catalytic converter calculated as mass oxygen equivalent |
| $LSF_{firstNSCin}Switch\_l/r =$ | Switch of the Lambda signal upstream the first $NO_x$ storage catalytic converter from lean to rich operation |
| $LSF_{firstNSCout}Switch\_l/r =$ | Switch of the Lambda signal downstream of the first $NO_x$ storage catalytic converter from lean to rich operation |
| $LSF_{firstNSCout}Switch\_r/l =$ | Switch of the Lambda signal downstream of the first $NO_x$ storage catalytic converter from rich to lean operation |
| $\lambda_{firstNSCin} =$ | Air/fuel ratio (lambda value) upstream of the first $NO_x$ storage catalytic converter |
| $\lambda_{firstNSCout} =$ | Air/fuel ratio (lambda value) downstream of the first $NO_x$ storage catalytic converter |
| $m_{IntakeAir} =$ | Mass flow intake air |
| $c_{Air}(O_2) =$ | Oxygen concentration in air (used for operation of the system) |
| $M(O_2) =$ | Molar mass of oxygen |
| $M(Air) =$ | Molar mass of air (used for operation of the system) |

As discussed above, in the present method the rich phase is terminated at the earliest when the amount of reducing components leaving the first $NO_x$ storage catalytic converter is 0.05 times the amount of reducing components consumed by the first $NO_x$ storage catalytic converter during the time interval beginning when the air/fuel ratio upstream of the first $NO_x$ storage catalytic converter turns from lean to rich conditions and ending when the air/fuel ratio downstream of the first $NO_x$ storage catalytic converter turns from lean to rich conditions. Preferably, the rich phase is terminated just before the reducing components break through the catalytic converter having oxygen storage capacity downstream of the SCR catalytic converter to prevent the emission of ammonia, hydrocarbons and carbon monoxide. The breakthrough of reducing components can, for example, be detected by a lambda sensor.

In one embodiment, the duration of the rich phase is controlled by a lambda sensor configured downstream of the first $NO_x$ storage catalytic converter or the SCR catalytic converter. Alternatively, the duration of the rich phase is controlled by a lambda sensor configured downstream of the catalytic converter having oxygen storage capacity. It is also possible to use two lambda sensors, one being configured downstream of the first $NO_x$ storage catalytic converter or the SCR catalytic converter, the other being configured downstream of the catalytic converter having oxygen storage capacity. In the context of the position of the lambda sensors, the term "downstream of has the meaning of "directly downstream of, i.e. no other catalytic converter is interposed between the lambda sensor and the converter the lambda sensor is downstream of. Any of the lambda sensors which are commonly employed in the field of automotive exhaust gas treatment can be used in the present invention. For example, HEGO (heated exhaust gas oxygen) lambda sensor or linear lambda sensors as well as the oxygen sensing function of $NO_x$ sensor can be suitably employed.

The catalytic converter having oxygen storage capacity can, for example, be a second $NO_x$ storage catalytic converter, a three-way catalytic converter, or a diesel oxidation catalytic converter.

For example, any of the three-way catalytic converters that are conventionally employed in the treatment of automotive exhaust gases can be used as the catalytic converter having oxygen storage capacity. Any of the three-way catalytic converters that are commonly employed in the field of automotive exhaust gas treatment systems can be used in the present invention as long as the three-way catalytic converter comprises an oxygen storage material. Oxygen storage materials store oxygen and/or $NO_x$ under lean conditions and release oxygen and/or $NO_x$ under rich conditions. Example of oxygen storage materials include palladium, cerium oxide, cerium/zirconium mixed oxides and cerium/zirconium mixed oxides doped with rare earth metals, iron or manganese, as well as the $NO_x$-storage materials described below. The three-way catalytic converter can, for example, comprise platinum, palladium or rhodium as catalytically active components. The three-way catalytic converter can further comprise alumina, titania, earth alkali metal oxides or combinations thereof as support oxides for the precious metals.

Any of the diesel oxidation catalytic converters that are conventionally employed in the treatment of automotive exhaust gases can be used as the catalytic converter having oxygen storage capacity as long as the diesel oxidation catalytic converter comprises an oxygen storage material, such as those described above. The diesel oxidation catalytic converter can, for example, comprise platinum or palladium as catalytically active components, preferably platinum and palladium. In this embodiment, palladium can stabilize platinum against sintering at elevated temperatures. The diesel oxidation catalytic converter can further comprise support materials for the catalytically active components, such as zeolites, alumina, silica, titania or zirconia or combinations thereof, preferably zeolites, alumina or silica or combinations thereof.

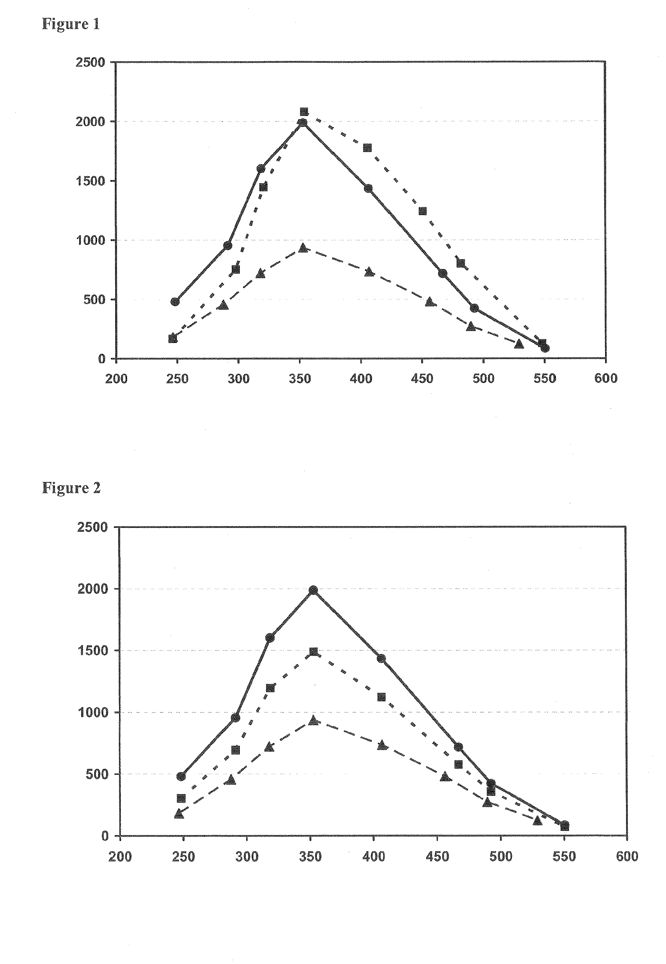

In a preferred embodiment, the catalytic converter having oxygen storage capacity is a second $NO_x$ storage catalytic converter, for example any of the $NO_x$ storage catalytic converters described below. This embodiment provides advantages in particular at higher temperatures. An aged SCR catalytic converter typically is capable of completely adsorbing ammonia at temperatures up to about 300°C. At higher temperatures, however, a continuous breakthrough of ammonia can typically be observed, which increases with temperature. In embodiments, wherein the catalytic converter having oxygen storage capacity is, for example, a three-way catalytic converter or a diesel oxidation catalytic converter, ammonia which may be leaving the SCR catalytic converter can be oxidized to $NO_x$ on the catalytic converter having oxygen storage capacity during a lean phase, which would lead to a decrease in the overall $NO_x$ conversion rate. In contrast, when the catalytic converter having oxygen storage capacity is a second $NO_x$ storage catalytic converter, ammonia which may be leaving the SCR catalytic converter can be oxidized and stored on the second $NO_x$ storage catalytic converter or can react with $NO_x$ that had previously been stored on the second $NO_x$ storage catalytic converter to give nitrogen. In particular, when switching from rich phase to lean phase, the first $NO_x$ storage catalytic converter starts storing $NO_x$ entering into the exhaust gas treatment system, i.e. during the initial stage of the lean phase no $NO_x$ is available at the SCR catalytic converter which could react with ammonia. Ammonia is meanwhile being desorbed from the SCR catalytic converter at higher temperatures (this explains the decrease in performance of system 3 as compared to system 2 in Figure 1 at temperatures above 350°C: the second $NO_x$ storage catalytic converter has to oxidize and adsorb the ammonia which is desorbed from the SCR catalytic converter). The second $NO_x$ storage catalytic converter prevents ammonia which may be desorbed from the SCR catalytic converter at higher temperatures from leaving the exhaust gas treatment system as emissions. When a second $NO_x$ storage catalytic converter is employed as the catalytic converter having oxygen storage capacity, the second $NO_x$ storage catalytic converter does not necessarily need to contain oxygen storage materials such as e.g. $CeO_2$. Rather, it can also contain any of the mentioned $NO_x$ storage materials which are able to store oxygen in form of nitrogen oxides.

In addition to prolonging the rich phase, the second $NO_x$ storage catalytic converter can prolong the lean phase. Without wishing to be bound by theory, the following mechanism may be responsible for this effect. The second $NO_x$ storage catalytic converter can adsorb $NO_x$, i.e. it will take longer for $NO_x$ to leave the exhaust gas treatment system leading to the termination of the lean phase being delayed. Due to the prolonging of the lean phase, the first $NO_x$ storage catalytic converter can adsorb a larger amount of $NO_x$ as compared to a system having a diesel oxidation or three way catalytic converter downstream of the SCR catalytic converter or having no catalytic converter with oxygen storage capacity downstream of the SCR catalytic converter at all. The increase in $NO_x$ loading on the first $NO_x$ storage catalytic converter during the lean phase can result in an increase in ammonia formation during the subsequent rich phase.

In a preferred embodiment, the first $NO_x$ storage catalytic converter comprises less oxygen storage material than the second $NO_x$ storage catalytic converter. This embodiment can be advantageous, since oxygen storage materials can reduce the amount of ammonia formation during rich operation.

It is further preferred to adjust the volume of the SCR catalytic converter such that the ammonia formed during the rich phase on the upstream $NO_x$ storage catalytic converter can be completely stored on the subsequent SCR catalytic converter.

It can further be preferred to choose the catalyst volume of the first $NO_x$ storage catalytic converter to be smaller than the catalyst volume of the second $NO_x$ storage catalytic converter. In this embodiment, slip of ammonia through the SCR catalytic converter, which may occur at higher temperatures (such as above 300°C), can be reduced. This may be due to a reduction of the time period until $NO_x$ breaks through the first $NO_x$ storage catalytic converter during the lean phase, leading to earlier consumption of the ammonia stored on the SCR catalytic converter.

In an alternative embodiment, depending on the aging temperatures and the temperature management of the system, it can be preferred to choose the catalyst volume of the first $NO_x$ storage catalytic converter to be larger than the catalyst volume of the second $NO_x$ storage catalytic converter. In this embodiment, the SCR catalytic converter can be protected from high temperatures. Further, it may be preferred to incorporate a large portion of the total $NO_x$ storage components and catalytically active components (i.e. contained in the first and second $NO_x$ storage catalytic converter) into the first $NO_x$ storage catalytic converter in embodiments, wherein the temperature of the exhaust gas stream is low (such as 200°C) upstream of the first $NO_x$ storage catalytic converter.

It is further preferred that the exhaust gas treatment system does not contain a second SCR catalytic converter downstream of the catalytic converter having oxygen storage capacity. When an exhaust gas treatment system is operated as defined in the present invention, substantially no ammonia leaves the second $NO_x$ storage catalytic converter, i.e. a second SCR catalytic converter downstream of the catalytic converter having oxygen storage capacity is not required.

The $NO_x$ storage catalytic converters employed in the present invention comprise catalyst materials, in particular $NO_x$ storage materials and catalytically active components. The $NO_x$ storage materials in turn can comprise the actual nitrogen oxides storage components, deposited in highly dispersed form on a support material. Any of the nitrogen oxides storage components, support materials and catalytically active components which are conventionally employed in the field of automotive exhaust gas treatment can also be employed in the present invention.

The NO$_x$ storage catalytic converters preferably comprise one or more storage components selected from compounds of alkali metals, alkaline-earth metals and rare earth metals and one or more catalytic components selected from platinum, palladium and rhodium. More preferably, the NO$_x$ storage catalysts employed in the present invention comprise barium oxide as a storage component and one or more catalytic components selected from platinum, palladium and rhodium.

The oxidation activity of the NO$_x$ storage catalytic converters for nitrogen monoxide may be increased further if the NO$_x$ storage catalytic converter additionally includes catalytically active components on the basis of support oxides selected from aluminum oxide, silicon dioxide, cerium oxide, zirconium oxide, titanium oxide, magnesium oxide or mixed oxides thereof which are coated with at least one of the platinum group metals platinum, palladium and rhodium. Particularly preferred support oxides are magnesium oxide, aluminum oxide, zirconium oxide and cerium oxide or mixtures thereof.

It is especially preferred that the NO$_x$ storage catalytic converter includes storage components on the basis of cerium oxide, which can be coated with platinum, and additionally platinum as a catalytic component on a support based on aluminum oxide. The storage components on the basis of cerium oxide are able to store nitrogen oxides at low temperatures and are therefore particularly suitable for the exhaust gas treatment system according to the invention.

Cerium oxide may be employed as a pure material or as a mixed oxide, preferably with zirconium oxide. Preferred are cerium/zirconium mixed oxides having a content of zirconium oxide between 2 and 50 wt.%, preferably between 2 and 40 wt.%, most preferably between 2 and 30 wt.% referred to the mixed oxide's total weight. The above-mentioned mixed oxides are particularly resistant to high temperature stresses which may occur, for example, during full-load operation of a diesel engine. A further increase of temperature resistance may be obtained by doping the mixed oxide with rare earth metal oxides such as praseodymium oxide.

The aluminum oxide which can be used as a support for platinum is an aluminum oxide of the so-called transition series, which has a high specific surface area between 10 and 400 m$^2$/g.

Doping this material with 2 to 10 wt.% lanthanum oxide may also stabilize it against thermal stresses. An aluminum silicate having a silicon dioxide content between 1 and 40 wt.% based on the total weight of the aluminum silicate is also particularly suitable.

Further NO$_x$ storage catalytic converters which can be employed in the present invention have previously been described. For example, EP-A-1 317 953 discloses a catalyst for lowering the amount of nitrogen oxides in the exhaust gas from lean burn engines comprising at least one noble metal of the platinum group of the periodic table of the elements, as well as at least one nitrogen oxides storage material comprising at least one nitrogen oxides storage component on one or more support materials, in combination with a homogeneous Mg/Al mixed oxide of magnesium oxide and aluminum oxide, wherein magnesium oxide is present in a concentration of 1 to 40 wt.-%, based on the total weight of the Mg/Al mixed oxide. As examples of the nitrogen oxides storage material oxides, carbonates or hydroxides of elements selected from the group consisting of magnesium, calcium, strontium, barium, alkali metals, rare earth metals or mixtures thereof are given. Preferably, the surface of the Mg/Al mixed oxide is loaded with one or more rare earth oxides, such as praseodymium oxide and/or cerium oxide. The NO$_x$ storage catalytic converters described in EP-A-1 317 953 provide excellent properties with regard to the width of their temperature window for NO$_x$ conversion nitrogen oxides and the conversion rate in this window, their storage capacity and their thermal stability. WO 2005/092481 describes further NO$_x$ storage catalytic converters which can be employed in the present invention. In particular, a nitrogen oxide storage material is disclosed which comprises at least one nitrogen oxide storage component on a homogeneous magnesium-aluminum mixed oxide doped with rare earth oxides as support material, with the magnesium-aluminum mixed oxide containing from 1 to 30% by weight of magnesium oxide, based on the total weight of the magnesium-aluminum mixed oxide.

Preferably, the first NO$_x$ storage catalytic converter comprises components which promote the formation of ammonia under rich exhaust gas conditions, such as compounds of iron, nickel or cobalt, for example oxides of iron, nickel or cobalt.

The SCR catalytic converters employed in the present invention can comprise any catalytic component which catalyzes the ammonia-SCR reaction. These include zeolite-containing catalytic components, in particular zeolites exchanged with copper and/or iron, tungsten-containing catalytic components, molybdenum-containing catalytic components, cerium-containing catalytic components, zirconium-containing catalytic components, titanium-containing catalytic components, niobium-containing catalytic components, vanadium-containing catalytic components or combinations thereof.

Zeolites are oxidic silicon/aluminum compounds with a specific crystal structure. They have the general composition

$$M_{2/n}O \cdot Al_2O_3 \cdot xSiO_2 \cdot yH_2O$$

wherein M represents a cation with the valency n and x is the modulus. The modulus is always greater than or equal to 2.

The SCR catalytic converter preferably includes zeolites, wherein the zeolites may be present in the acid H-form or be exchanged with metal ions. In addition, the SCR catalytic components may entirely consist of zeolites, wherein the zeolites are present in the acid H-form or are exchanged with metal ions. The zeolites can in particular be exchanged with iron and copper, within or exceeding their exchange capacity. Alternatively, the SCR catalytic converter may include a solid acid system of titanium dioxide and vanadium. In addition, this material may include at least one component selected from tungsten oxide, molybdenum oxide, silicon dioxide and sulfate. As a further alternative, the SCR catalytic converter may include tungsten-containing catalytic components, molybdenum-containing catalytic components, cerium-containing catalytic components, zirconium-containing catalytic components (such as zirconium dioxide), titanium-containing catalytic components (such as titanium dioxide), niobium-containing catalytic components, vanadium-containing catalytic components or combinations thereof.

In the above-described $NO_x$ storage catalytic converters and SCR catalytic converters, the catalyst materials can be applied on a carrier, such as an inert, ceramic or metal honeycomb carrier, in the form of a coating.

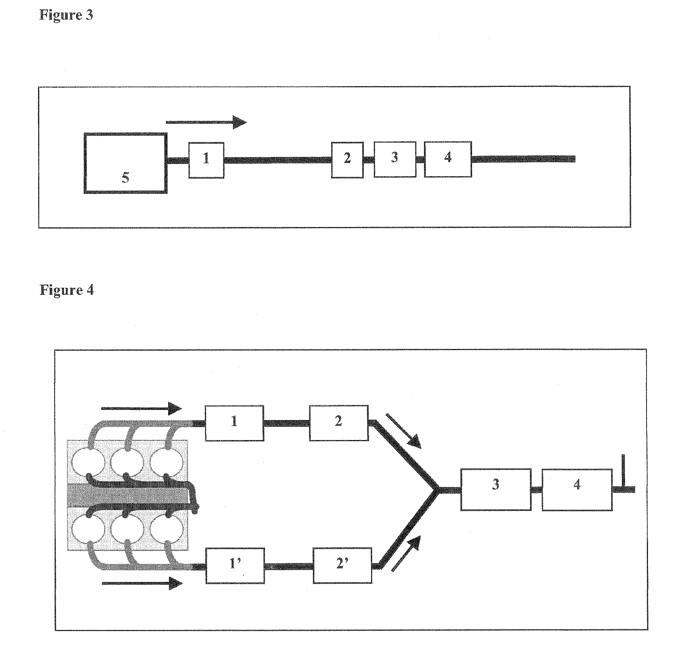

Preferred embodiments of the present invention are shown in Figures 3, 4 and 5. As shown in Figure 4, an additional three-way catalyst can be present upstream of the first $NO_x$ storage catalytic converter. Any of the three-way catalsts which are commonly employed for the treatment of exhaust gases can be used for this purpose. In one embodiment, the upstream three-way catalyst is in a close-coupled configuration to the engine and the first $NO_x$ storage catalytic converter, the SCR catalytic converter and the catalytic converter having oxygen storage capacity are configure in an underfloor position. Herein, "close-coupled" indicates a position wherein the respective component of the exhaust gas treatment system is typically configured at a distance in the range of about 0.05 meter to 0.8 meter from the engine exhaust manifold. Underfloor components are typically at a distance of at least 1 meter from the engine exhaust manifold.

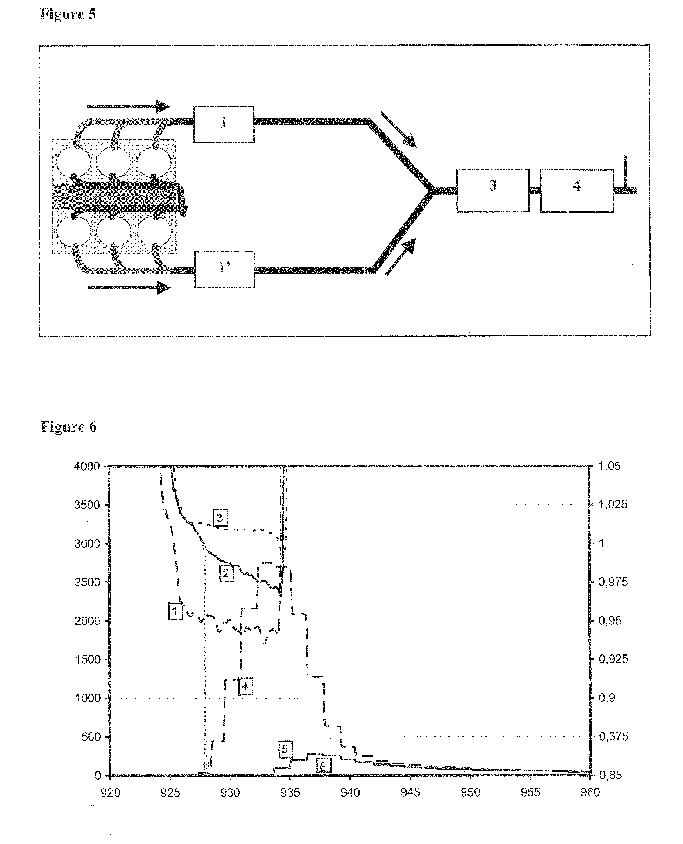

The arrangement shown in Figure 5 having a close-coupled $NO_x$ storage catalytic converter and downstream underfloor SCR and $NO_x$ storage catalytic converters provides the advantage that a close-coupled catalytic converter reaches its operating temperature more rapidly than an underfloor catalytic converter. Therefore, the close-coupled $NO_x$ storage catalytic converter can already store $NO_x$ and form ammonia at low exhaust gas temperatures, which can be stored very efficiently by the underfloor SCR catalytic converter, which still has a relatively low temperature.

It is further possible to interpose a particulate filter in any of the arrangements shown in Figures 3 to 5 or to coat the inlet and/or outlet walls of a wall flow filter with one of the described catalytic functionalities. Wall flow filters having catalytic coatings are, for example, described in WO 2005/014146. Thus, one or more of the following components can coated on a wall of a wall flow filter: a diesel oxidation catalyst or a three-way catalyst upstream of the first $NO_x$ storage catalyst; the first $NO_x$ storage catalyst; the SCR catalyst; or the catalyst having oxygen storage capacity (which can, for example, be a second $NO_x$ storage catalyst, a three-way catalyst or a diesel oxidation catalyst). For example, the particulate filter can be coated with catalyst materials as described above so as to function as a $NO_x$ storage catalytic converter, which can be employed as the upstream $NO_x$ storage catalytic converter and/or the downstream $NO_x$ storage catalytic converter, if present. The particle filter can also be coated with catalyst materials as described above so as to function as a SCR catalytic converter, which can be employed as the SCR catalytic converter in the present invention. It is further possible to coat the inlet walls of a wall flow filter and the outlet walls of the same wall flow filter with different functionalities. For example, the inlet walls of a wall flow filter can be coated so as to function as a SCR catalytic converter and the outlet walls of the same wall flow filter can be coated so as to function as a catalytic converter having oxygen storage capacity (such as a $NO_x$ storage catalytic converter, a three-way catalytic converter or a diesel oxidation catalytic converter). Such coated filter can be used in the present invention as the SCR catalytic converter and the downstream catalytic converter having oxygen storage capacity (i.e. the second $NO_x$ storage catalytic converter, the three-way catalytic converter or the diesel oxidation catalytic converter). Other combinations of inlet/outlet wall coatings include: $NO_x$ storage catalyst and SCR catalyst, respectively (to be used in the present invention as the first $NO_x$ storage catalytic converter and SCR catalytic converter, respectively); diesel oxidation catalyst or three-way catalyst and $NO_x$ storage catalyst, respectively (to be used in an embodiment of the present invention, wherein the first $NO_x$ storage catalytic converter is in a close coupled position).

**Figures:**

Figure 1: Average $NO_x$ conversion (%) for a rich/lean cycle of three different systems (System 1 (triangles): $NO_x$ storage catalytic converter + SCR catalytic converter; System 2 (squares): two $NO_x$ storage catalytic converters; System 3 (circles): $NO_x$ storage catalytic converter + SCR catalytic converter + $NO_x$ storage catalytic converter). The x-axis shows the average temperature (°C) inside the upstream $NO_x$ storage catalytic converter, the y-axis shows the $NO_x$ conversion (mg) for a rich/lean cycle.

Figure 2: Average NO$_x$ conversion (%) for a rich/lean cycle over NO$_x$ storage catalytic converter + SCR catalytic converter of System 1 (triangles) and System 3 (squares) as well as over the complete System 3 (circles). The x-axis shows the average temperature (°C) inside the upstream NO$_x$ storage catalytic converter, the y-axis shows the NO$_x$ conversion (mg) for a rich/lean cycle.

Figure 3: 1: optional close-coupled three-way catalytic converter or diesel oxidation catalytic converter or NO$_x$ storage catalytic converter; 2: underfloor NO$_x$ storage catalytic converter; 3: underfloor SCR catalytic converter; 4: underfloor NO$_x$ storage catalytic converter; 5: engine.

Figure 4: symbol on the left: engine; 1 and 1': optional close-coupled three-way catalytic converter or diesel oxidation catalytic converter or NO$_x$ storage catalytic converter; 2 and 2': underfloor NO$_x$ storage catalytic converter; 3: underfloor SCR catalytic converter; 4: underfloor NO$_x$ storage catalytic converter.

Figure 5: symbol on the left: engine; 1 and 1': close-coupled NO$_x$ storage catalytic converter; 3: underfloor SCR catalytic converter; 4: underfloor NO$_x$ storage catalytic converter.

Figure 6: The x-axis shows the time (s); the left-hand y-axis shows the ammonia concentration (ppm); the right-hand y-axis shows lambda;

    1: lambda upstream of the first NO$_x$ storage catalytic converter
    2: lambda downstream of the first NO$_x$ storage catalytic converter
    3: lambda downstream of the second NO$_x$ storage catalytic converter
    4: ammonia concentration downstream of the first NO$_x$ storage catalytic converter
    5: ammonia concentration downstream of the SCR catalytic converter
    6: ammonia concentration downstream of the second NO$_x$ storage catalytic converter

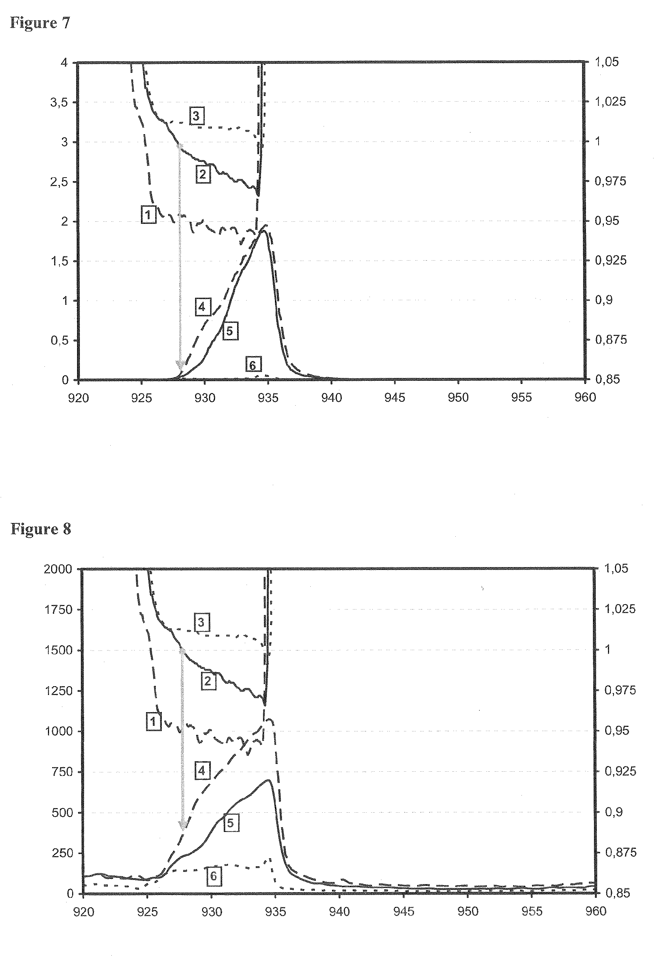

Figure 7: The x-axis shows the time (s); the left-hand y-axis shows the carbon monoxide concentration (ppm); the right-hand y-axis shows lambda;

    1: lambda upstream of the first NO$_x$ storage catalytic converter
    2: lambda downstream of the first NO$_x$ storage catalytic converter
    3: lambda downstream of the second NO$_x$ storage catalytic converter
    4: carbon monoxide concentration downstream of the first NO$_x$ storage catalytic converter
    5: carbon monoxide concentration downstream of the SCR catalytic converter
    6: carbon monoxide concentration downstream second of the NO$_x$ storage catalytic converter

Figure 8: The x-axis shows the time (s); the left-hand y-axis shows the hydrocarbon concentration (ppm); the right-hand y-axis shows lambda;

    1: lambda upstream of the first NO$_x$ storage catalytic converter
    2: lambda downstream of the first NO$_x$ storage catalytic converter
    3: lambda downstream of the second NO$_x$ storage catalytic converter
    4: hydrocarbon concentration downstream of the first NO$_x$ storage catalytic converter
    5: hydrocarbon concentration downstream of the SCR catalytic converter
    6: hydrocarbon concentration downstream of the second NO$_x$ storage catalytic converter

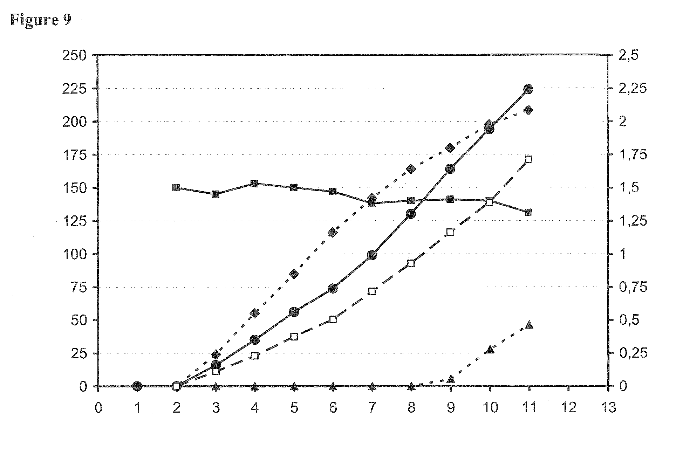

Figure 9: The x-axis shows the number of the consecutive rich/lean cycles. The amount of reducing components entering the first NO$_x$ storage catalytic converter during the rich phase is increased going from low cycle numbers to high cycle numbers. The left-hand y-axis shows the mass (mg oxygen equivalent) of reducing components consumed by the first NO$_x$ storage catalytic converter (solid line solid squares); the mass (mg oxygen equivalent) of reducing components leaving the first NO$_x$ storage catalytic converter (solid line circles); the cumulated ammonia mass (mg) formed downstream of the first NO$_x$ storage catalytic converter during a rich/lean cycle (dotted line diamonds); the cumulated ammonia mass (mg) formed downstream of the second NO$_x$ storage catalytic converter during a rich/lean cycle (dotted line triangles); the right-hand y-axis shows the ratio of the amount of reducing components leaving the first NO$_x$ storage catalytic converter to the amount of reducing components consumed by the first NO$_x$ storage catalytic converter (dashed line open squares).

The following examples illustrate the invention.

**Examples**

**Example 1**

System 1 (Comparative Example): Close-coupled three-way catalytic converter (TWC) + underfloor $NO_x$ storage catalytic converter and downstream SCR catalytic converter.

System 2 (Comparative Example): Close-coupled three-way catalytic converter (TWC) + two underfloor $NO_x$ storage catalytic converters.

System 3: Close-coupled three-way catalytic converter (TWC) + underfloor $NO_x$ storage catalytic converter, downstream SCR catalytic converter and further downstream second $NO_x$ storage catalytic converter.

The three-way catalytic converter comprised platinum, palladium and rhodium in a total loading of 128 g/cft, the $NO_x$ underfloor catalytic converters comprised platinum, palladium and rhodium in a total loading of 100 g/cft and barium as $NO_x$ storage component, and the SCR catalytic converter comprised a zeolite exchanged with iron.

For each of the three Systems 1 to 3, the close-coupled three-way catalytic converter had a volume of 0.8 l, and each underfloor catalytic converter had a volume of 1.0 l. Before measurements were taken, each system was aged on the engine test bench for 30 hours at $\lambda$ = 1, with an average temperature of 810°C at the upstream $NO_x$ storage catalytic converter.

The evaluation of the systems at the engine test bench were carried out by operating the engine in 8 different stationary operation points resulting in different temperatures in the first $NO_x$ storage catalytic converter from 250 to 550°C. In each point the engine was operated with a lean air/fuel mix. Termination of the lean and rich phases was controlled by sensors with the $NO_x$ sensor being located downstream of the ultimate catalyst in the system. The lean phase was terminated when the $NO_x$-sensor detected a $NO_x$ slip of 100 ppm $NO_x$ and the rich phase was terminated when the lambda signal of the $NO_x$ sensor detected rich conditions ($\lambda<1$).

Figure 1 shows the average $NO_x$ conversion for an average of three lean/rich cycles in each operation point of the engine of each of Systems 1 to 3. System 1 has the lowest $NO_x$ conversion. A comparison of System 2 with System 3 indicates that the interposed SCR catalytic converter faciliates a significant increase in $NO_x$ conversion, in particular at lower temperatures.

System 1 and System 3 are compared in Figure 2. The partial $NO_x$ conversion over the $NO_x$ catalytic converter + SCR catalytic converter of System 3 is shown as well as the conversion over the complete system 3. From a comparison of the $NO_x$ conversion over the $NO_x$ catalytic converter + SCR catalytic converter of Systems 1 and 3 it can be seen that throughout the complete temperature range the conversion of System 3 is higher than that of System 1, due to the increase in the duration of the lean and the rich phase of System 3, leading to a larger amount of ammonia being formed over the first $NO_x$ storage catatalytic converter which is subsequently stored on the SCR catalytic converter. The $NO_x$ conversion of the complete System 3 is even higher, showing that the downstream $NO_x$ storage catalytic converter contributes throughout the complete temperature range to an additional $NO_x$ reduction despite of the partial oxidation of ammonia during the lean phase. The addition of a downstream oxidation catalyst to System 1 would not be expected to facilitate an additional $NO_x$ reduction, but rather to lower the $NO_x$ conversion at higher temperatures, as can be seen from a comparison of Systems 2 and 3 in Figure 1.

**Example 2**

An exhaust gas treatment system having a close-coupled TWC and underfloor first $NO_x$ storage catalytic converter, SCR catalytic converter and second $NO_x$ storage catalytic converter was investigated at the engine test bench. The system was aged at the engine for 30 hours at a lambda value of 1 at 820°C inside the first $NO_x$ storage underfloor catalytic converter. In the subsequent test, three lambda sensors were configured upstream of the first $NO_x$ storage catalytic converter, downstream of the first $NO_x$ storage catalytic converter, and downstream of the second $NO_x$ storage catalytic converter, respectively. Additionally, the emissions of hydrocarbons and carbon monoxide as well as ammonia were recorded in three positions in the exhaust system: downstream of the first $NO_x$ storage catalytic converter, downstream of the SCR catalytic converter and downstream of the second $NO_x$ storage catalytic converter. The test was carried out under stationary engine operation conditions at an average temperature of 300°C inside the first $NO_x$ storage catalytic converter.

It was found that when the lambda value at the first lambda sensor falls below a value of 1 (line 2 in Figures 6 to 8), ammonia and carbon monoxide immediately begin to exit from the first $NO_x$ storage catalytic converter (line 4 in Figures 6 and 7, respectively). Hydrocarbons begin to exit from the first $NO_x$ storage catalytic converter a little earlier (line 4 in Figure 8), since methane formed at the beginning of the rich phase upstream of the first $NO_x$ storage catalytic converter passes the first $NO_x$ storage catalytic converter without substantially being converted.

The SCR catalytic converter can adsorb ammonia very efficiently as can be seen from a comparison of lines 4 and 5 in Figure 6. In contrast, carbon monoxide and hydrocarbons can pass the SCR catalytic converter without substantially being converted or adsorbed (compare lines 4 and 5 in Figures 7 and 8, respectively). Hence, in the absence of a catalytic converter having oxygen storage capacity downstream of the SCR catalytic converter carbon monoxide and hydrocarbons could leave the exhaust gas treatment system as emissions. In the system according to the invention, however, the second $NO_x$ storage catalytic converter can oxidize the reducing components (compare lines 5 and 6 in Figures 7 and 8).

When lambda at the lambda sensor downstream of the second $NO_x$ storage catalytic converter falls below a value of 1 the rich phase should be terminated at the latest in order to keep breakthrough of reducing components at a minimum. As can be seen from lines 6 in Figures 7 and 8, hardly any carbon monoxide and hydrocarbons leave the exhaust gas treatment system according to the invention. Further, essentially no ammonia emissions are formed (line 6 in Figure 6).

**Example 3**

For the exhaust gas system described in Example 2, the amount of ammonia leaving the first $NO_x$ storage catalytic converter was determined when the amount of reducing components entering the first $NO_x$ storage catalytic converter during the rich phase is increased stepwise by engine management.

The average temperature in the first $NO_x$ storage catalytic converter during the rich/lean cycling was about 270°C. The lean phase was terminated when a $NO_x$ sensor downstream of the first $NO_x$ storage catalytic converter detected a $NO_x$ signal of about 100 ppm $NO_x$. The rich phase was terminated by time control. In the first cycle the rich phase was chosen to last 8 seconds. The rich phase was prolonged in each consecutive cycle by 1.5 seconds in order to increase the amount of reducing components during the rich phase. A constant lambda of 0.94 was chosen during the rich phase. Similar results were obtained using decreasing lambda values in the rich phases of consecutive cycles in order to increase the amount of reducing components and keeping the duration of the rich phase constant in each cycle. Figure 9 shows the consecutive rich/lean cycles wherein the amount of reducing components was increased during the rich phase in each cycle, i.e. the amount of reducing components entering the system during the rich phase was increased going from cycle 1 to cycle 11. The amount of reducing components consumed by the first $NO_x$ storage catalytic converter (solid line solid squares) stayed almost constant while the amount of reducing components leaving the first $NO_x$ storage catalytic converter (circles) increased from cycle to cycle. Ammonia was detected downstream of the first $NO_x$ storage catalytic converter (diamonds) when reducing components were leaving the first $NO_x$ storage catalytic converter the first time (cycle No. 3). 24 mg ammonia were leaving the first $NO_x$ storage catalytic converter during cycle No. 3, with the amount of reducing components leaving the first $NO_x$ storage catalytic converter being 0.11 times the amount of reducing components consumed by the first $NO_x$ storage catalytic converter.

With increasing amounts of reducing components leaving the first $NO_x$ storage catalytic converter, the amount of ammonia formed over the first $NO_x$ storage catalytic converter increased. In cycle No. 8 164 mg ammonia were formed during the rich phase. In cycle No. 9 reducing components started to leave the second $NO_x$ storage catalytic converter and ammonia could be detected downstream of the second $NO_x$ storage catalytic converter (triangles).

When the same test as described above was carried out at an average temperature of about 300°C inside the first $NO_x$ storage catalytic converter, 78 mg ammonia were formed over a rich/lean cycle when the amount of reducing components leaving the first $NO_x$ storage catalytic converter was 0.05 times the amount of reducing components consumed by the first $NO_x$ storage catalytic converter.

**Claims**

1.  A method for the treatment of an exhaust gas comprising $NO_x$, wherein the method comprises the step of subjecting the exhaust gas to an exhaust gas treatment system comprising, in order of the exhaust stream:

    a) a first $NO_x$ storage catalytic converter;
    b) a catalytic converter for selective catalytic reduction (SCR) downstream of the first $NO_x$ storage catalytic converter; and
    c) a catalytic converter having oxygen storage capacity downstream of the SCR catalytic converter,
    wherein the exhaust gas treatment system is operated in alternating rich and lean phases, wherein the rich phase is terminated when the amount of reducing components leaving the first $NO_x$ storage catalytic converter is at least 0.05 times the amount of reducing components consumed by the first $NO_x$ storage catalytic converter during the time interval beginning when the air/fuel ratio upstream of the first $NO_x$ storage catalytic converter turns from lean to rich conditions and ending when the air/fuel ratio downstream of the first $NO_x$ storage catalytic converter turns from lean to rich conditions.

**2.** The method of claim 1, wherein the catalytic converter having oxygen storage capacity is a second $NO_x$ storage catalytic converter, a three-way catalytic converter, or a diesel oxidation catalytic converter.

**3.** The method of claim 2, wherein the catalytic converter having oxygen storage capacity is a second $NO_x$ storage catalytic converter.

**4.** The method of any one of claims 1 to 3, wherein the exhaust gas treatment system comprises a lambda sensor downstream of the first $NO_x$ storage catalytic converter or downstream of the catalytic converter having oxygen storage capacity.

**5.** The method of any one of claims 1 to 4, wherein the exhaust gas treatment system does not contain a second SCR catalytic converter downstream of the catalytic converter having oxygen storage capacity.

**6.** The method of any of claims 1 to 5, wherein the first $NO_x$ storage catalytic converter comprises less oxygen storage material than the catalytic converter having oxygen storage capacity.

**7.** An exhaust gas treatment system comprising, in order of the exhaust stream:

a) a first $NO_x$ storage catalytic converter;
b) a catalytic converter for selective catalytic reduction (SCR) downstream of the first $NO_x$ storage catalytic converter; and
c) a second $NO_x$ storage catalytic converter downstream of the SCR catalytic converter;
wherein the exhaust gas treatment system further comprises a lambda sensor downstream of the first $NO_x$ storage catalytic converter, the or downstream the SCR catalytic converter and/or downstream of the second $NO_x$ storage catalytic converter.

**8.** An exhaust gas treatment system comprising, in order of the exhaust stream:

a) a first $NO_x$ storage catalytic converter;
b) a catalytic converter for selective catalytic reduction (SCR) downstream of the first $NO_x$ storage catalytic converter; and
c) a second $NO_x$ storage catalytic converter downstream of the SCR catalytic converter;
wherein the exhaust gas treatment system does not contain a second SCR catalytic converter downstream of the second $NO_x$ storage catalytic converter.

**9.** An exhaust gas treatment system comprising, in order of the exhaust stream:

a) a first $NO_x$ storage catalytic converter;
b) a catalytic converter for selective catalytic reduction (SCR) downstream of the first $NO_x$ storage catalytic converter; and
c) a second $NO_x$ storage catalytic converter downstream of the SCR catalytic converter;
wherein the first $NO_x$ storage catalytic converter comprises less oxygen storage material than the second $NO_x$ storage catalytic converter.

**10.** The method or the exhaust gas treatment system of any of claims 1 to 9, wherein the first $NO_x$ storage catalytic converter comprises compounds of iron, nickel or cobalt.

**11.** The method or the exhaust gas treatment system of any of claims 1 to 10, wherein the first $NO_x$ storage catalytic converter and/or the second $NO_x$ storage catalytic converter, if present, comprises one or more storage components selected from compounds of alkali metals, alkaline-earth metals and rare earth metals and one or more catalytic components selected from platinum, palladium and rhodium.

**12.** The method or the exhaust gas treatment system of claim 11, wherein the first $NO_x$ storage catalytic converter and/or the second $NO_x$ storage catalytic converter, if present, further comprises a support comprising aluminum oxide, silicon dioxide, cerium oxide, zirconium oxide, titanium oxide, magnesium oxide or mixed oxides thereof, and wherein the storage component and the catalytic component are present on the support.

**13.** The method or the exhaust gas treatment system of any of claims 1 to 12, wherein the SCR catalytic converter comprises zeolite-containing catalytic components, tungsten-containing catalytic components, molybdenum-containing catalytic components, cerium-containing catalytic components, zirconium-containing catalytic components, titanium-containing catalytic components, niobium-containing catalytic components, vanadiuzn-containing catalytic components or combinations thereof.

14. The method or the exhaust gas treatment system of claim 13, wherein the zeolite-containing catalytic component comprises zeolites exchanged with copper and/or iron and wherein the vanadium-containing catalytic component comprises a solid acid system of titanium dioxide and vanadium.

15. The method or the exhaust gas treatment system of any of claims 1 to 14, wherein the first $NO_x$ storage catalytic converter is in a close-coupled configuration to the engine and the SCR catalytic converter and the catalytic converter having oxygen storage capacity are in an underfloor position.

16. The method or the exhaust gas treatment system of any of claims 1 to 15, wherein the exhaust gas treatment system further comprises a three-way catalytic converter or a diesel oxidation catalytic converter upstream of the first $NO_x$ storage catalytic converter.

17. The method or the exhaust gas treatment system of any of claims 1 to 16, wherein at least one of the first $NO_x$ storage catalytic converter, the SCR catalytic converter, the catalytic converter having oxygen storage capacity, the three-way catalytic converter and the diesel oxidation catalytic converter is in the form of a catalytic coating on a particulate filter.

18. Use of a catalytic converter having oxygen storage capacity for prolonging the rich phase of an exhaust gas treatment system operated in alternating rich and lean phases, the exhaust gas treatment system comprising, in order of the exhaust stream:

   a) a first $NO_x$ storage catalytic converter; and
   b) a catalytic converter for selective catalytic reduction (SCR) downstream of the first $NO_x$ storage catalytic converter,
   wherein the catalytic converter having oxygen storage capacity is configured downstream of the SCR catalytic converter.

19. The use of claim 18, wherein the catalytic converter having oxygen storage capacity is a second $NO_x$ storage catalytic converter, a three-way catalytic converter, or a diesel oxidation catalytic converter.

Figure 1

Figure 2

Figure 3

Figure 4

Figure 5

Figure 6

Figure 7

Figure 8

Figure 9

**European Patent Office**

**EUROPEAN SEARCH REPORT**

Application Number

EP 07 15 0308

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | WO 2005/047663 A (ENGELHARD CORP [US]) 26 May 2005 (2005-05-26)<br>* page 9, line 11 - page 11, line 11; figure 1b *<br>* page 19, line 16 - page 20, line 12 *<br>----- | 1,2,4-6, 10-19<br>3 | INV.<br>F01N3/08<br>F01N3/20<br><br>ADD.<br>F01N7/02 |
| X | WO 2006/008625 A (EATON CORP [US]; HU HAORAN [US]; STOVER THOMAS [US]) 26 January 2006 (2006-01-26)<br>* page 16, line 12 - page 17, line 15; figures 4,5 *<br>----- | 1,2,4-6, 10-19 | |
| X | EP 1 630 131 A (DELPHI TECH INC [US]) 1 March 2006 (2006-03-01)<br>* paragraph [0022]; figure 1 *<br>----- | 1,2,4-6, 10-19 | |
| X | WO 2007/129203 A (EATON CORP [US]; REUTER JOHANNES W [US]) 15 November 2007 (2007-11-15)<br>* paragraphs [0027], [0028]; figure 1 *<br>----- | 1,2,4-6, 10-19 | |
| Y | WO 2004/022935 A (JOHNSON MATTHEY PLC [GB]; BLAKEMAN PHILIP GERALD [GB]; TWIGG MARTYN VI) 18 March 2004 (2004-03-18)<br>* page 14, line 1 - page 17, line 12; figure 1 *<br>----- | 3 | TECHNICAL FIELDS SEARCHED (IPC)<br><br>F01N |

~~The present search report has been drawn up for all claims~~

| Place of search | Date of completion of the search | Examiner |
|---|---|---|
| Munich | 2 July 2008 | Kolland, Ulrich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...................................................................
& : member of the same patent family, corresponding document

EPO FORM 1503 03.82 (P04C01)

**European Patent**

Office

Application Number

EP 07 15 0308

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

see additional sheet(s)

☐ The present supplementary European search report has been drawn up for those parts of the European patent application which relate to the invention first mentioned in the claims (Rule 164 (1) EPC).

The Search Division considers that the present European patent application does not comply with the requirements of unity of invention and relates to several inventions or groups of inventions, namely:

1. claims: 1-6,10-19

    The subject-matter known from the cited prior art documents disclose an exhaust gas treatment system having
    a) a first NOx storage catalytic converter;
    b) a catalytic converter for selective catalytic reduction (SCR)
    c) a catalytic converter having oxygen storage capacity.

    The subject-matter of claim 1 further defines that the exhaust gas treatment system is operated in alternating rich and lean phases, wherein the rich phase is terminated when the amount of reducing components leaving the first NOx storage catalytic converter is at least 0.05 times the amount of reducing components consumed by the first NOx storage catalytic converter during the time interval beginning when the air/fuel ratio upstream of the first NOx storage catalytic converter turns from lean to rich conditions and ending when the air/fuel ratio downstream of the first NOx storage catalytic converter turns from lean to rich conditions.

    ---

2. claim: 7

    An exhaust gas treatment system
    wherein the exhaust gas treatment system further comprises a lambda sensor downstream of the first NOx storage catalytic converter, the or downstream the SCR catalytic converter and/or downstream of the second NOx storage catalytic converter.

    ---

3. claim: 8

    An exhaust gas treatment system
    wherein the exhaust gas treatment system does not contain a second SCR catalytic converter downstream of the second NOx storage catalytic converter.

    ---

4. claim: 9

    An exhaust gas treatment system
    wherein the first NOx storage catalytic converter comprises less oxygen storage material than the second NOx storage catalytic converter.

    ---

## ANNEX TO THE EUROPEAN SEARCH REPORT
## ON EUROPEAN PATENT APPLICATION NO.

EP 07 15 0308

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2008

| Patent document cited in search report | | Publication date | Patent family member(s) | | Publication date |
|---|---|---|---|---|---|
| WO 2005047663 | A | 26-05-2005 | EP | 1687514 A2 | 09-08-2006 |
| | | | JP | 2007527314 T | 27-09-2007 |
| | | | KR | 20060107757 A | 16-10-2006 |
| | | | US | 2007269353 A1 | 22-11-2007 |
| | | | US | 2005129601 A1 | 16-06-2005 |
| WO 2006008625 | A | 26-01-2006 | BR | PI0513102 A | 29-04-2008 |
| | | | CA | 2573815 A1 | 26-01-2006 |
| | | | CN | 101018597 A | 15-08-2007 |
| | | | EP | 1784247 A1 | 16-05-2007 |
| | | | JP | 2008506881 T | 06-03-2008 |
| | | | US | 2006010859 A1 | 19-01-2006 |
| | | | US | 2007033928 A1 | 15-02-2007 |
| | | | US | 2006010857 A1 | 19-01-2006 |
| EP 1630131 | A | 01-03-2006 | NONE | | |
| WO 2007129203 | A | 15-11-2007 | US | 2007256407 A1 | 08-11-2007 |
| WO 2004022935 | A | 18-03-2004 | AU | 2003269109 A1 | 29-03-2004 |
| | | | BR | 0313501 A | 21-06-2005 |
| | | | CA | 2494112 A1 | 18-03-2004 |
| | | | EP | 1534941 A1 | 01-06-2005 |
| | | | JP | 2005538291 T | 15-12-2005 |
| | | | KR | 20050057213 A | 16-06-2005 |
| | | | MX | PA05001877 A | 03-06-2005 |
| | | | US | 2006254258 A1 | 16-11-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040076565 A
- WO 2005047663 A
- US 20060010857 A
- US 20060153761 A
- US 20060010859 A
- US 7043902 B
- US 7178331 A
- EP 1317953 A
- WO 2005092481 A
- WO 2005014146 A